# EUROPÄISCHE PATENTSCHRIFT

(11) **EP 0 526 775 B1**
(45) Veröffentlichungstag und Bekanntmachung des Hinweises auf die Patenterteilung: **10.09.1997**
(21) Anmeldenummer: 92111935.0
(22) Anmeldetag: 14.07.1992
(51) Int. Cl.: E03C 1/06, F16C 11/10

(54) **Halterung für eine Handbrause**
Support for a shower head
Support pour pomme de douche

(30) Priorität: 23.07.1991 DE 4124352
(43) Veröffentlichungstag der Anmeldung: 10.02.1993
(73) Patentinhaber: FRIEDRICH GROHE AKTIENGESELLSCHAFT, D-58675 Hemer (DE)
(72) Erfinder: Heimann, Bruno, W-5758 Fröndenberg-Ardey (DE); Hochstein, Detlef, W-5870 Hemer (DE)

(56) Entgegenhaltungen:
- DE-U- 8 504 974
- FR-A- 2 492 912
- GB-A- 2 192 530

## Beschreibung

Die Erfindung betrifft eine Haltevorrichtung für eine über eine Schlauchleitung mit Wasser versorgte Handbrause, die an einer Gebäudewand an einer Wandstange oder einem Standrohr mit einer Führungsbohrung und einer Fixiereinrichtung befestigbar ist, wobei ein Halter vorgesehen ist, der eine mit einem Längsschlitz versehene Aufnahmebohrung aufweist, in der die Handbrause mit einem Einsteckteil befestigbar ist, und der um eine waagerechte, die Mittellinie der Führungsbohrung schneidende Achse verschwenkbar von der Vorrichtung mittels einer konzentrisch zur Schwenkachse angeordneten Verzahnung gehalten ist.
Eine derartige Vorrichtung ist aus der österreichischen Patentschrift Nr. 320 537 bekannt. Bei dieser Vorrichtung ist jedoch ein besonderes Spannglied erforderlich, mit dem sowohl ein Greifglied zur Aufnahme einer Handbrause als auch ein Befestigungsglied zur Anordnung an einer Wandstange fixierbar ist. Bei einer Positionsänderung des Halters für die Handbrause ist daher zunächst das Spannglied zu lösen und nach der vorgenommenen Positionsänderung wieder zu spannen. Insbesondere ein freies Verschwenken des Greifglieds um seine Mittelachse mit einer bestimmten Schwergängigkeit ist nicht möglich.
Ferner ist aus dem deutschen Gebrauchsmuster 75 21 122 ein Handbrausehalter bekannt, bei dem das Greifglied bzw. der Halter an einem radial von der Wandstange vorstehenden, gabelförmigen Armstück gehalten ist. Der Halter ist hierbei mit Stirnverzahnungen in den beiden Gabelenden verdrehbar angeordnet. Durch die gabelförmige Ausbildung baut diese Einrichtung jedoch relativ sperrig und besteht aus vielen Einzelteilen. Darüber hinaus werden zumindest die Gabelarme durch die federnde Halterung des Greifglieds bzw. Halters einer Dauerspannung ausgesetzt, so daß, wenn die Gabel aus Kunststoff hergestellt ist, deren Oberfläche anschließend verchromt werden soll, bei häufiger Benutzung der Einrichtung die Gefahr einer Beschädigung der Gabel, insbesondere im Bereich der aufgebrachten Chromschicht, besteht.

Der Erfindung liegt die Aufgabe zugrunde, die im Oberbegriff des Anspruchs 1 angegebene Vorrichtung zu verbessern und so auszubilden, daß Dauerspannungen auf die einzelnen Bauteile weitgehend vermieden werden und eine Verstellung des Halters ohne Lösung eines Hilfselements möglich ist.
Diese Aufgabe wird erfindungsgemäß dadurch gelöst, daß am Vorrichtungskörper einerseits die Fixiereinrichtung zur Festlegung an der Wandstange oder dem Standrohr und anderseits eine Stirnfläche mit einer Riefenverzahnung vorgesehen ist, wobei an der Stirnfläche eine mit dem Halter drehfest verbundene Rasthülse mit einem Flansch anliegt, der eine entsprechende Riefenverzahnung aufweist, und die Rasthülse von einem Bolzen in der Rastposition zum Vorrichtungskörper gehalten ist, wobei der Flansch so ausgebildet ist, daß er beim Verschwenken eine elastische Auslenkung erfährt und die Zähne der Riefenverzahnung in einer bestimmten Schwergängigkeit aneinander vorbeirutschen.
Weitere Ausgestaltungen der Erfindung sind in den Ansprüchen 2 bis 9 angegeben.

Mit den vorgeschlagenen Maßnahmen wird insbesondere erreicht, daß die Haltevorrichtung insgesamt kompakt ausgebildet werden kann und die Verstellkraft für den Halter so definierbar ist, daß eine selbsttätige Verstellung ausgeschlossen wird. Die Verstellkraft zum Verschwenken des Halters um seine Mittelachse ist weitgehend toleranzunabhängig und ermöglicht ohne Lösen eines Hilfselements die Verstellung des Halters um seine Mittelachse. Vom Benutzer kann somit bei aufgesteckter Handbrause durch die vorbestimmte Schwergängigkeit des Rastelements die Handbrause in eine beliebige Neigungslage verschwenkt werden.

Ein Ausführungsbeispiel der Erfindung ist in der Zeichnung dargestellt und wird im folgenden näher beschrieben. Es zeigt
- Figur 1: eine Haltevorrichtung im Längsschnitt, angeordnet an einem Standrohr;

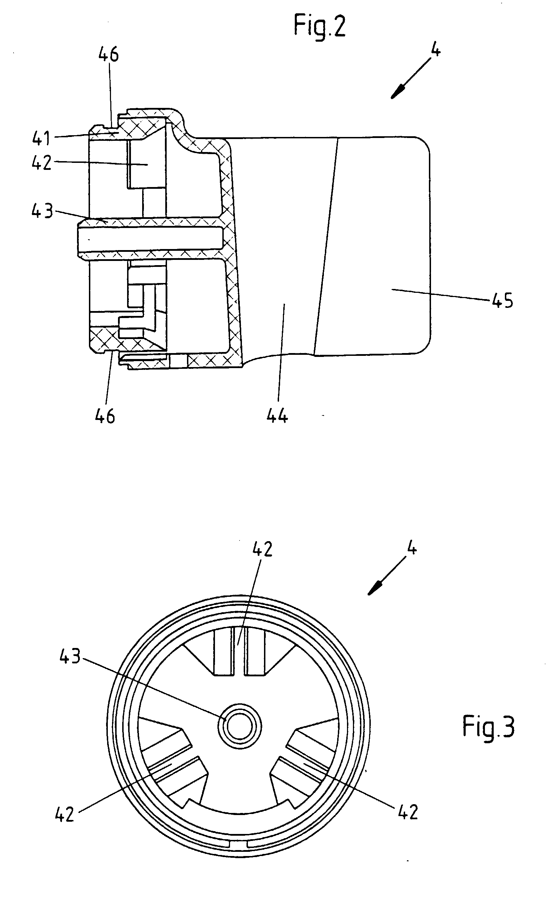

- Figur 2: den in Figur 1 gezeigten Halter im Längsschnitt;
- Figur 3: den Halter gemäß Figur 2 in der Rückansicht;
- Figur 4: die in Figur 1 gezeigte Rasthülse im Seitenschnitt;
- Figur 5: die Rasthülse gemäß Figur 4 in Stirnansicht auf den Flansch;
- Figur 6: die Rasthülse gemäß Figur 4 um 90^{o} gedreht in Seitenansicht;
- Figur 7: den in Figur 1 gezeigten Bolzen in Seitenansicht;
- Figur 8: den Bolzen gemäß Figur 7 in Draufsicht;
- Figur 9: den in Figur 1 gezeigten Vorrichtungskörper im Längsschnitt;
- Figur 10: den Vorrichtungskörper gemäß Figur 9 in Seitenansicht;
- Figur 11: den Vorrichtungskörper gemäß Figur 9 in der Schnittebene XI;

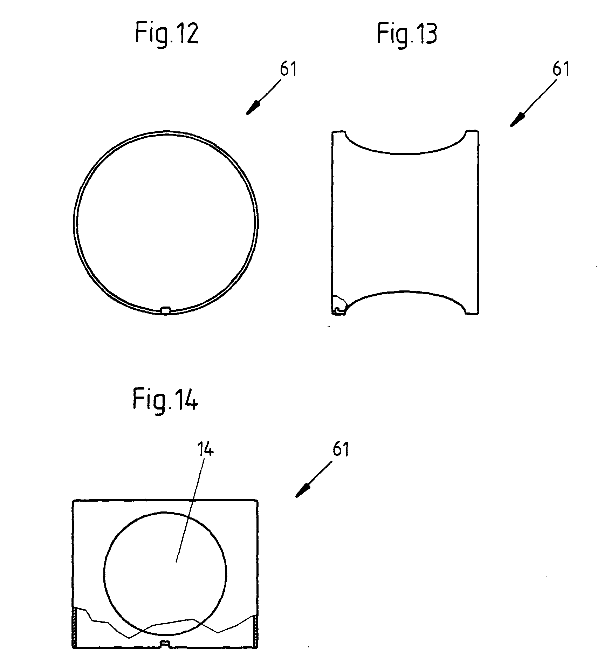

- Figur 12: die in Figur 1 gezeigte Abdeckhülse in Draufsicht;
- Figur 13: die Abdeckhülse gemäß Figur 12 in Seitenansicht;
- Figur 14: die Abdeckhülse gemäß Figur 12 um 90^{o} gedreht.

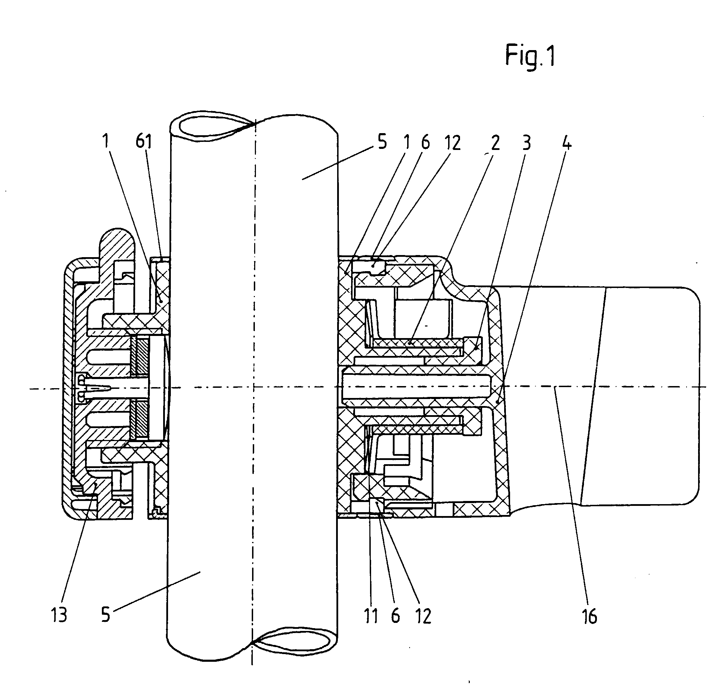

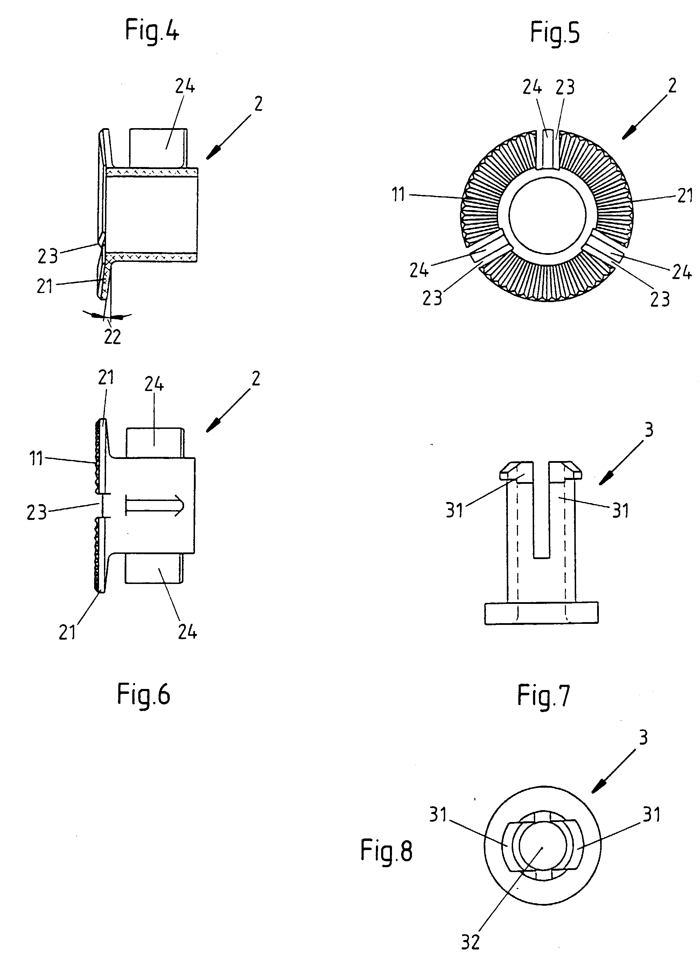

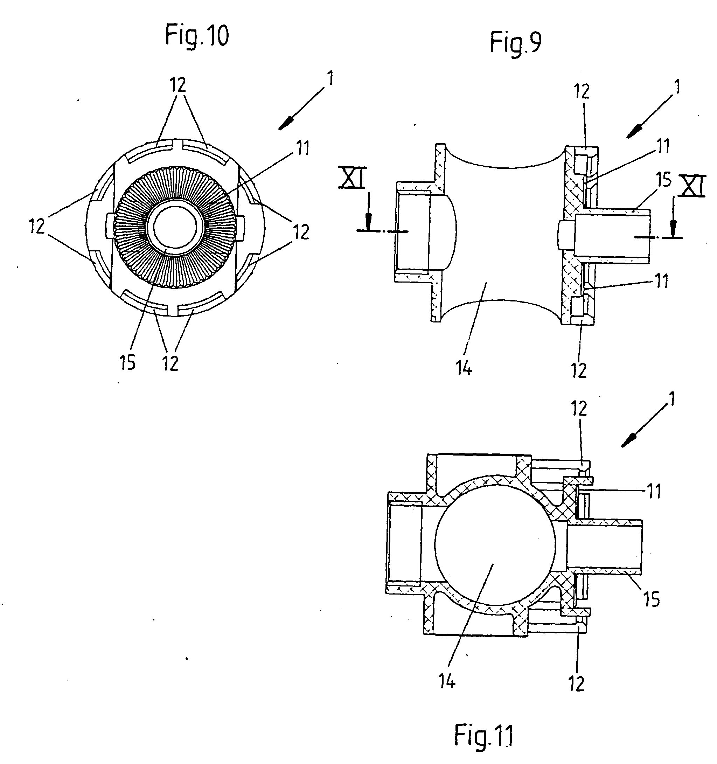

Die in Figur 1 gezeigte Haltevorrichtung besteht im wesentlichen aus einem Vorrichtungskörper 1, einer Rasthülse 2, einem Bolzen 3, einem Halter 4 zur Aufnahme einer in der Zeichnung nicht dargestellten Handbrause und einem zum Teil dargestellten Standrohr 5.
Das Standrohr 5 wird dabei im allgemeinen mit Konsolen an einer Gebäudewand befestigt. Auf dem Standrohr 5 ist mit einer Führungsbohrung 14 der Vorrichtungskörper 1 axial verschiebbar und zur Mittelachse verdrehbar angeordnet. Zur Fixierung des Vorrichtungskörpers 1 in der gewünschten Position ist eine Feststellschraube 13 vorgesehen. Die Fixierung erfolgt dabei durch Reibschluß.
An der der Feststellschraube 13 diametral gegenüberliegenden Seitenfläche des Vorrichtungskörpers 1 ist eine Riefenverzahnung 11 nach Art einer Plankerbverzahnung ausgebildet. Konzentrisch zur Riefenverzahnung 11, wie es insbesondere aus Figur 10 zu entnehmen ist, ist ein Lagerzapfen 15 vorgesehen, auf dem die Rasthülse 2 drehbar gelagert ist. Die Rasthülse 2 ist, wie es insbesondere aus Figur 4 bis 6 zu entnehmen ist, mit einem Flansch 21 versehen, auf dessen vorstehender Stirnseite sich eine entsprechend zum Vorrichtungskörper 1 ausgebildete Riefenverzahnung 11 befindet. Der Flansch 21 ist dabei mit Radialschlitzen 23 in drei Segmente unterteilt. Darüber hinaus ist der Flansch 21 mit einem Winkel 22 von etwa 5° nach vorne geneigt ausgebildet, so daß der Flansch 21 einen Kegelwinkel von etwa 170° aufweist. Außerdem weist die Rasthülse 2 im Mantelbereich drei symmetrisch angeordnete Radialvorsprünge 24 auf.
Die Rasthülse 2 wird in ihrer Rastposition (Figur 1) von einem hohlen Bolzen 3, welcher mit Rastbeinen 31 in entsprechende Aussparungen am Vorrichtungskörper 1 eingreift, gehalten.
Die Rasthülse 2 wird von dem Halter 4 haubenförmig umgeben, wobei in dem Halter 4 ein Aufnahmering 41 unlösbar, z.B. durch Ultraschallverschweißen, angeordnet ist. In dem Aufnahmering 41 sind dabei Ausnehmungen 42 ausgebildet, in die in der Stecklage die Radialvorsprünge 24 der Rasthülse 2 einfassen und somit eine drehfeste Verbindung zwischen Rasthülse 2 und Halter 4 herstellen. Zur Drehlagerung des Halters 4 ist außerdem konzentrisch zur Mittelachse ein Zapfen 43 ausgebildet, der in einer Bohrung 32 des eingesteckten Bolzens 3 gelagert ist. Der Aufnahmering 41 weist außerdem eine umlaufende Ringnut 46 auf, in die in der aufgesteckten Position federnde Zungen 12 von dem Vorrichtungskörper 1 einrasten. An der dem Aufnahmering 41 gegenüberliegenden Stirnseite weist der Halter 4 eine kegelförmige Aufnahmebohrung 44 für ein in der Zeichnung nicht dargestelltes Steckteil einer Handbrause auf. Zur Stirnseite hin ist die Aufnahmebohrung 44 mit einem Längsschlitz 45 ausgebildet, dessen Breite so bemessen ist, daß der Brauseschlauch seitlich durch den Schlitz in die Bohrung eingeschoben werden kann.
Schließlich ist der Vorrichtungskörper 1 mit einem Abdeckring 6 und einer Abdeckhülse 61 dekormäßig verkleidet, wobei der Abdeckring 6 außerdem die Zungen 12 in ihrer Rastlage verriegelt.
Im wesentlichen können alle Einzelteile der Haltevorrichtung aus Kunststoff im Spritzgußverfahren hergestellt werden.

Der Zusammenbau der Vorrichtung kann in folgender Weise vorgenommen werden:
Zunächst wird die Rasthülse 2 auf den Lagerzapfen 15 aufgeschoben und mit dem Flansch 21 an der Riefenverzahnung 11 zur Anlage gebracht. Hiernach kann der Bolzen 3 eingeschoben und mit den Rastbeinen 31 an dem Vorrichtungskörper 1 verrastet werden, wodurch die Rasthülse 2 in ihrer Axiallage fixiert ist. Nunmehr wird der Halter 4 mit seinem Zapfen 43 in die Bohrung 32 des Bolzens 3 eingeschoben, wobei im Endbereich die Zungen 12 in die Ringnut 46 einschnappen und den Halter 4 axial zum Vorrichtungskörper 1 fixieren. Beim Aufschiebvorgang sind dabei gleichzeitig die Radialvorsprünge 24 in die Ausnehmungen 42 des Aufnahmerings 41 eingeschoben, so daß eine drehfeste Kupplung zwischen Halter 4 und Rasthülse 2 hergestellt ist. Gleichzeitig werden mit dem Zapfen 43 in der Stecklage des Halters 4 die Rastbeine 31 in der Rastposition zum Vorrichtungskörper 1 verriegelt. Zum Schluß können der Abdeckring 6, mit dem die Zungen 12 in der Rastposition verriegelt werden, sowie die Abdeckhülse 61 aufgeschoben und die Feststellschraube 13 in den Vorrichtungskörper 1 eingeschraubt werden. Hiernach kann das Standrohr 5 in die Führungsbohrung 14 eingeschoben werden, wonach die Haltevorrichtung betriebsbereit ist.
Die Haltevorrichtung kann bei gelöster Festellschraube 13 axial auf dem Standrohr 5 verschoben oder verdreht werden. Nachdem die Haltevorrichtung in einer gewünschten Position auf dem Standrohr 5 fixiert ist, kann die Handbrause in der Aufnahmebohrung 44 des Halters 4 abgelegt werden. Mit der eingesteckten Handbrause kann vom Benutzer wahlweise der Drehwinkel um die Schwenkachse 16 verstellt werden. Hierbei wird der Flansch 21 im Bereich der Segmente elastisch ausgelenkt, so daß die Zähne der Riefenverzahnung 11 in einer bestimmten Schwergängigkeit aneinander vorbeirutschen. Als vorteilhaft hat sich hierbei gezeigt, daß die Zähne der Riefenverzahnung etwa einen Flankenwinkel von 100° aufweisen und die Riefenverzahnung 11 an der Stirnseite des Vorrichtungskörpers 1 etwa 54 Zähne hat.

Das vorstehend beschriebene Ausführungsbeispiel ist für die Anordnung an einem Standrohr vorgesehen. Selbstverständlich kann die Haltevorrichtung auch konsolenartig ausgebildet sein, wobei die Konsole unmittelbar an der Gebäudewand fixiert wird. In diesem Fall würde die Feststellschraube 13 entfallen. Der Halter 4 für die Handbrause wäre dann allein um die Schwenkachse 16 drehbar.

## Patentansprüche

1. Haltevorrichtung für eine über eine Schlauchleitung mit Wasser versorgte Handbrause, die an einer Gebäudewand an einer Wandstange oder einem Standrohr (5) mit einer Führungsbohrung (14) und einer Fixiereinrichtung befestigbar ist, wobei ein Halter (4) vorgesehen ist, der eine mit einem Längsschlitz (45) versehene Aufnahmebohrung (44) aufweist, in der die Handbrause mit einem Einsteckteil befestigbar ist, und der um eine waagerechte, die Mittellinie der Führungsbohrung (14) schneidende Achse verschwenkbar von der Vorrichtung mittels einer konzentrisch zur Schwenkachse (16) angeordneten Verzahnung gehalten ist, dadurch gekennzeichnet, daß am Vorrichtungskörper (1) einerseits die Fixiereinrichtung zur Festlegung an der Wandstange oder dem Standrohr (5) und andererseits eine Stirnfläche mit einer Riefenverzahnung (11) vorgesehen ist, wobei an der Stirnfläche eine mit dem Halter (4) drehfest verbundene Rasthülse (2) mit einem Flansch (21) anliegt, der eine entsprechende Riefenverzahnung (11) aufweist, und die Rasthülse (2) von einem Bolzen (3) in der Rastposition zum Vorrichtungskörper (1) gehalten ist, wobei der Flansch (21) so ausgebildet ist, daß er beim Verschwenken eine elastische Auslenkung erfährt und die zähne der Riefenverzahnung (11) in einer bestimmten Schwergängigkeit aneinander vorbeirutschen.

2. Haltevorrichtung nach Anspruch 1, dadurch gekennzeichnet, daß der Flansch (21) der Rasthülse (2) um einen Winkel (22) von etwa 5° vorgeneigt ist, so daß der Flansch (21) einen Kegelwinkel von etwa 170° aufweist.

3. Haltevorrichtung nach Anspruch 1 oder 2, dadurch gekennzeichnet, daß der Flansch (21) durch Radialschlitze (23) in Segmente unterteilt ist.

4. Haltevorrichtung nach einem der Ansprüche 1 bis 3, dadurch gekennzeichnet, daß auf der Stirnfläche des Vorrichtungskörpers (1) etwa 54 Riefenzähne mit einem Flankenwinkel von etwa 100° angeordnet sind.

5. Haltevorrichtung nach einem der Ansprüche 1 bis 4, dadurch gekennzeichnet, daß die Rasthülse (2) von einem zentral angeordneten, mit Rastbeinen (31) am Vorrichtungskörper (1) gehalterten, eine Bohrung (32) aufweisenden Bolzen (3) an dem Vorrichtungskörper (1) gehalten ist.

6. Haltevorrichtung nach einem der Ansprüche 1 bis 5, dadurch gekennzeichnet, daß die Rasthülse (2) Radialvorsprünge (24) aufweist, die zur drehfesten Verbindung in entsprechende Ausnehmungen (42) in dem Halter (4) eingreifen.

7. Haltevorrichtung nach einem der Ansprüche 1 bis 6, dadurch gekennzeichnet, daß der Halter (4) zweiteilig ausgebildet ist und koaxial mit einem Zapfen (43) im Bolzen (3) drehbar gelagert ist, wobei ein Aufnahmering (41) für die Radialvorsprünge (24) unlösbar in dem Halter (4) angeordnet ist, der zur Axialsicherung eine Ringnut (46) aufweist, in die in der Stecklage federnde Zungen (12) des Vorrichtungskörpers (1) einrasten.

8. Haltevorrichtung nach Anspruch 7, dadurch gekennzeichnet, daß die Zungen (12) in der Raststellung von einem Abdeckring (6) gesichert sind.

9. Haltevorrichtung nach einem der Ansprüche 1 bis 8, dadurch gekennzeichnet, daß die Einzelteile im wesentlichen aus Kunststoff im Spritzgußverfahren hergestellt sind.

## Claims

1. Holding device for a hand shower, which is supplied with water *via* a hose line, which holding device is arranged to be fastened on a building wall on a wall bar or an upright tube (5) by means of a guide bore (14) and a fixing arrangement, there being provided a holder (4), which has a receiving bore (44) furnished with a longitudinal slot (45), in which receiving bore (44) the hand shower can be fastened by means of a push-in portion, and which holder (4) is held by the device so as to be swivellable about a horizontal axis intersecting the centre line of the guide bore (14) by means of a tooth arrangement disposed concentrically to the axis of swivel (16), characterised in that there are provided on one side of the device body (1) the fixing arrangement for fastening to the wall bar or the upright tube (5) and on the other side an end face having a fluted tooth arrangement (11), a locking sleeve (2), which is connected to the holder (4) non-rotatably, resting against the end face with a flange (21) provided with a corresponding fluted tooth arrangement (11), and the locking sleeve (2) being held in the locked position with respect to the device body (1) by a bolt (3), wherein the flange (21) is so formed that, on swivelling, it undergoes a resilient dislocation and the teeth of the fluted tooth arrangement (11) slide past one another with a predetermined difficulty of movement.

2. Holding device according to claim 1, characterised in that the flange (21) of the locking sleeve (2) is inclined forwards at an angle (22) of about 5°, so that the flange (21) has a cone angle of about 170°.

3. Holding device according to claim 1 or claim 2, characterised in that the flange (21) is divided into sectors by radial slits (23).

4. Holding device according to any one of claims 1 to 3, characterised in that there are disposed on the end face of the device body (1) about 54 fluted teeth having a flank angle of about 100°.

5. Holding device according to any one of claims 1 to 4, characterised in that the locking sleeve (2) is held on the device body (1) by a centrally disposed bolt (3), which is provided with a bore (32) and retained in the device body (1) by locking limbs (31).

6. Holding device according to any one of claims 1 to 5, characterised in that the locking sleeve (2) has radial projections (24), which engage in corresponding recesses (42) in the holder (4) for a non-rotatable connection.

7. Holding device according to any one of claims 1 to 6, characterised in that the holder (4) is formed from two parts and is rotatably mounted coaxially by means of a pin (43) in the bolt (3), a receiving ring (41) for the radial projections (24) being disposed non-detachably in the holder (4), which receiving ring (41) is provided, for axial retention, with an annular groove (46), into which resilient tongues (12) of the device body (1) lock in the inserted position.

8. Holding device according to claim 7, characterised in that the tongues (12) are retained in the locked position by a cover ring (6).

9. Holding device according to any one of claims 1 to 8, characterised in that the individual parts are produced essentially from plastics by injection moulding.

## Revendications

1. Support pour une douchette à main alimentée en eau par un flexible, cette douchette peut être fixée à un mur de salle de bain, à une tige murale ou un tube mural (5), comportant un perçage de guidage (14) et une installation de blocage, un support (4) avec un perçage de réception (44) et une fente longitudinale (45) dans laquelle se fixe la douchette et la pièce à emmancher, et qui est maintenu pivotant autour d'un axe horizontal coupant la ligne médiane du perçage de guidage (14) par le dispositif à l'aide d'une denture concentrique à l'axe de pivotement (16),
caractérisé en ce que
le corps (1) du dispositif comporte d'une part l'installation de blocage pour le blocage sur la tige murale ou le tube mural (5) et d'autre part une surface frontale avec une denture moletée (11), un manchon d'accrochage (2) relié solidairement au support (4), s'appuyant avec une bride (21) contre la surface frontale, cette bride ayant une denture moletée (11) et le manchon d'accrochage (2) étant maintenu en position d'accrochage par rapport au corps (1) du dispositif par un goujon (3), la bride (21) étant réalisée pour qu'au pivotement elle subisse une déformation élastique et que les dents de la denture moletée (11) glissent les unes par dessus les autres en opposant une certaine résistance.

2. Support selon la revendication 1,
caractérisé en ce que
la bride (21) du manchon d'accrochage (2) est inclinée vers l'avant d'un angle (22) d'environ 5° pour que la bride (21) forme un angle de cône d'environ 170°.

3. Support selon l'une des revendications 1 ou 2,
caractérisé en ce que
la bride (21) est subdivisée en segments par des fentes radiales (23).

4. Support selon l'une des revendications 1 à 3,
caractérisé en ce que
la surface frontale du corps (1) du dispositif comporte environ 54 dents moletées ayant un flanc de dents faisant un angle d'environ 100°.

5. Support selon l'une des revendications 1 à 4,
caractérisé en ce que
le manchon d'accrochage (2) est maintenu sur le corps (1) du dispositif par un goujon (3), central, ayant des branches d'accrochage (31) maintenues sur le corps (1) et présentant un perçage (32).

6. Support selon l'une des revendications 1 à 5,
caractérisé en ce que
le manchon d'accrochage (2) comporte des saillies radiales (24) venant prendre dans des cavités correspondantes (42) du support (4) pour réaliser une liaison solidaire en rotation.

7. Support selon l'une des revendications 1 à 6,
caractérisé en ce que
le support (4) en deux parties est monté en rotation coaxialement sur un téton (43) dans le goujon (3), une bague de réception (41) étant prévue de manière solidaire dans le support (4) pour les saillies radiales (24), ce support ayant une rainure annulaire (46) pour le blocage axial, dans laquelle viennent s'accrocher les languettes élastiques (12) du corps (1) en position engagée.

8. Support selon la revendication 7,
caractérisé en ce que
les languettes (12) sont bloquées en position d'accrochage par une bague de recouvrement (6).

9. Support selon l'une des revendications 1 à 8,
caractérisé en ce que
les pièces sont principalement fabriquées en matière plastique par injection.
